(19) Europäisches Patentamt
European Patent Office
Office européen des brevets

(11) **EP 4 625 871 A1**

(12) **EUROPEAN PATENT APPLICATION**
published in accordance with Art. 153(4) EPC

(43) Date of publication:
**01.10.2025 Bulletin 2025/40**

(21) Application number: **22968839.5**

(22) Date of filing: **20.12.2022**

(51) International Patent Classification (IPC):
**H04L 7/00** (2006.01)    **H04J 3/06** (2006.01)

(52) Cooperative Patent Classification (CPC):
**H04J 3/06; H04L 7/00**

(86) International application number:
**PCT/CN2022/140272**

(87) International publication number:
**WO 2024/130536 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• XUE, Lei
  **Shenzhen, Guangdong 518129 (CN)**
• LOU, Yannian
  **Shenzhen, Guangdong 518129 (CN)**
• WEI, Juan
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD, APPARATUS AND SYSTEM**

(57)    This application discloses a communication method. The method includes: A first apparatus generates and sends a first optical signal, where the first optical signal is a signal obtained by combining a first clock signal with a downlink digital signal, and the first clock signal includes a first transmission delay; and a second clock signal is obtained by transmitting the first clock signal on a transmission link, a sum of a transmission delay of the transmission link and the first transmission delay is zero. A second apparatus performs time synchronization based on the second clock signal. In technical solutions of this application, digital-analog hybrid transmission and simultaneous transmission of the clock signal and the downlink digital signal may be completed through one transmission link, and an independent clock signal transmission link does not need to be established. In addition, after transmission of the first clock signal on the transmission link, the first transmission delay in the first clock signal may be canceled by the transmission delay of the transmission link, and the transmission delay of the transmission link does not need to be measured or calculated, thereby improving accuracy of time synchronization.

FIG. 2

**Description**

TECHNICAL FIELD

This application relates to the field of communication technologies, and specifically, to a communication method, an apparatus, and a system.

BACKGROUND

Currently, a time synchronization solution is usually that a first apparatus measures a transmission delay of a transmission link, and then transmits the transmission delay and timestamp information of the local end to a second apparatus through the transmission link; and the second apparatus may implement time synchronization with the first apparatus by demodulating the timestamp information and the transmission delay.

In an actual scenario, accuracy of measuring the transmission delay by the first apparatus may be affected by many factors. Consequently, accuracy of time synchronization of the second apparatus is low.

SUMMARY

This application provides a communication method, to improve accuracy of time synchronization. This application further provides a corresponding apparatus and system.

A first aspect of this application provides a communication method. The method includes: A first apparatus generates a first optical signal, where the first optical signal is a signal obtained by combining a first clock signal with a downlink digital signal, and the first clock signal includes a first transmission delay. The first apparatus sends the first optical signal, where a second clock signal is obtained by transmitting the first clock signal on a transmission link between the first apparatus and a second apparatus, a sum of a transmission delay of the transmission link and the first transmission delay is zero, and the second clock signal is used by the second apparatus to perform time synchronization.

In this application, the communication method may be applied to an open radio access network (open radio access network, O-RAN), the first apparatus may be an O-RAN distributed unit (O-RAN distributed unit, O-DU), and the second apparatus may be an O-RAN radio unit (O-RAN radio unit, O-RU). Definitely, the communication method may be further applied to another system that needs to perform time synchronization, and the first apparatus and the second apparatus may alternatively be other apparatuses. This is not limited in this application.

In this application, the first optical signal is a signal obtained through hybrid transmission of the first clock signal and the downlink digital signal. The hybrid transmission refers to transmission in a hybrid manner, and may be understood as combining the first clock signal with a position on a spectrum of the downlink digital signal, and then transmitting a combined signal as a whole.

In this application, the first clock signal may be an analog signal. In a phase representation form of the first clock signal, the first transmission delay may be understood as an opposite number of the transmission delay of the transmission link.

It can be learned from the foregoing solution that, the first apparatus combines the first clock signal with the downlink digital signal for transmission, and may complete digital-analog hybrid transmission and simultaneous transmission of the clock signal and the downlink digital signal through one transmission link, and an independent clock signal transmission link does not need to be established. In addition, after transmission of the first clock signal on the transmission link, the first transmission delay in the first clock signal transmitted by the first apparatus may be canceled by the transmission delay of the transmission link, and the transmission delay of the transmission link does not need to be measured or calculated, thereby improving accuracy of time synchronization of the second apparatus.

In a possible implementation, the first clock signal is combined with a first frequency band of the downlink digital signal.

In this possible implementation, the first frequency band may be a pre-specified frequency band on the spectrum of the downlink digital signal, and the first frequency band may include one or more frequencies. A combined frequency band is pre-specified, so that the second apparatus can easily filter a clock signal in the downlink digital signal.

In a possible implementation, the first frequency band includes a first spectral null, the first clock signal is combined with the first spectral null of the downlink digital signal, and the first spectral null is any power valley point on a spectrum of the downlink digital signal.

In this possible implementation, the power valley point refers to a trough position of the spectrum of the downlink digital signal. Configuring the clock signal to the power valley point can help the second apparatus obtain the clock signal through filtering, and can reduce impact on the downlink digital signal.

It should be noted that the first clock signal may be combined with the first spectral null in the first frequency band, or may be combined on one or more frequencies other than the first spectral null. This is not limited in this application.

In a possible implementation, the transmission link is an optical fiber link.

In a possible implementation, the method further includes: The first apparatus processes a third clock signal and a fourth clock signal to obtain the first clock signal, where the third clock signal is obtained, on the transmission link, by filtering a second optical signal from the second apparatus, the third clock signal is a clock signal obtained by transmitting a clock source signal on the transmission link in a round-trip manner, and the fourth clock signal is a frequency multiplied signal of the clock source signal.

In this possible implementation, the third clock signal may include twice the transmission delay of the transmission link. Definitely, if the third clock signal is obtained by performing n times of round-trip transmission of the clock source signal, the third clock signal may alternatively include 2n the transmission delay of the transmission link. The fourth clock signal may be a frequency-tripled signal of the clock source signal, or definitely, may be a frequency multiplied signal of another multiple, provided that the first clock signal including the first transmission delay can be obtained by processing the third clock signal and the fourth clock signal. In this application, a multiple of the transmission delay of the transmission link in the third clock signal and a multiple of a frequency of the fourth clock signal for that of the clock source signal are not limited. It can be learned from this implementation that the first clock signal including the first transmission delay may be determined in a manner of transmitting a clock signal between the first apparatus and the second apparatus in a round-trip manner. In this way, accuracy of obtaining the first transmission delay can be improved.

In a possible implementation, that the first apparatus processes a third clock signal and a fourth clock signal to obtain the first clock signal includes: The first apparatus performs frequency mixing on the third clock signal and the fourth clock signal to obtain a phase difference clock signal between the third clock signal and the fourth clock signal. The first apparatus obtains the first clock signal based on the phase difference clock signal.

In this possible implementation, frequency mixing is performed on the third clock signal and the fourth clock signal, to obtain the phase difference clock signal between the third clock signal and the fourth clock signal, so as to obtain the first transmission delay including a negative transmission delay of the transmission link, so that time synchronization is not affected by the transmission delay of the transmission link.

In a possible implementation, that the first apparatus obtains the first clock signal based on the phase difference clock signal includes: The first apparatus performs frequency division on the phase difference clock signal to obtain the first clock signal.

In this possible implementation, a frequency of the clock signal may be reduced through frequency division, so that the first clock signal may be within a spectrum range of the downlink digital signal.

In a possible implementation, the method further includes: The first apparatus generates a third optical signal, where the third optical signal is a signal obtained by combining the clock source signal with the downlink digital signal. The first apparatus sends the third optical signal, where the third clock signal is obtained by transmitting the clock source signal on the transmission link in a round-trip manner.

In this possible implementation, before the first clock signal is transmitted, digital-analog hybrid transmission may be performed on the clock source signal and the downlink digital signal to obtain the third clock signal, and then the first clock signal is obtained based on the foregoing description to perform time synchronization.

In a possible implementation, the clock source signal is combined with a second frequency band of the downlink digital signal.

In this possible implementation, the second frequency band may be a pre-specified frequency band on the spectrum of the downlink digital signal, and the second frequency band may include one or more frequencies. In this application, the second frequency band may or may not overlap the first frequency band. To cause the second apparatus to better distinguish between a signal generated by performing the transmission of the clock source signal on the transmission link and the second clock signal, the second frequency band generally does not overlap the first frequency band. In this way, the second apparatus can obtain clock signals through filtering for different purposes to perform different procedures.

In a possible implementation, the second frequency band includes a second spectral null, the clock source signal is combined with the second spectral null of the downlink digital signal, and the second spectral null is any power valley point other than the power valley point corresponding to the first spectral null on the spectrum of the downlink digital signal.

In this possible implementation, the clock source signal is combined with another valley point of the downlink digital signal, so that the second apparatus can obtain the clock signal through filtering, and impact on the downlink digital signal can be reduced.

A second aspect of this application provides a communication method. The method may be applied to a second apparatus that communicates with a first apparatus through a transmission link. The method includes: The second apparatus receives a first optical signal, where the first optical signal is a signal obtained by combining a first clock signal with a downlink digital signal, the first clock signal includes a first transmission delay, and a second clock signal is obtained by transmitting the first clock signal on the transmission link. The second apparatus obtains the second clock signal from the first optical signal through filtering. The second apparatus performs time synchronization based on the second clock signal.

In this application, the first optical signal is from the first apparatus, and is transmitted to the second apparatus through the transmission link.

In the second aspect, because the first transmission delay has been canceled in a process in which the first clock signal is transmitted on the transmission link, the second clock signal has no transmission delay. The second apparatus may use the second clock signal to perform time synchronization, thereby improving accuracy of the time synchronization.

In a possible implementation, the second clock signal is combined with a first frequency band of the downlink digital signal, and that the second apparatus obtains the second clock signal from the first optical signal through filtering includes: The second apparatus obtains the second clock signal from the first frequency band through filtering.

In this possible implementation, the second apparatus may obtain the second clock signal from the first frequency band through filtering, so that accuracy of filtering the second clock signal can be improved.

In a possible implementation, the first frequency band includes a first spectral null, the first clock signal is combined with the first spectral null of the downlink digital signal, and the first spectral null is any power valley point on a spectrum of the downlink digital signal.

In a possible implementation, the transmission link is an optical fiber link.

In a possible implementation, the method further includes: The second apparatus sends a second optical signal through the transmission link, where the second optical signal includes a clock signal obtained by transmitting a clock source signal on the transmission link.

In this possible implementation, the clock signal obtained by transmitting the clock source signal on the transmission link is a clock signal obtained by transmitting, on the transmission link, the clock source signal to the second apparatus. The second optical signal may be a signal obtained by combining, with an uplink digital signal, the clock signal obtained by transmitting, on the transmission link, the clock source signal to the second apparatus. For a combining manner, refer to the foregoing combining manner of the first clock signal and the downlink digital signal for understanding.

In a possible implementation, before that the second apparatus sends a second optical signal through the transmission link, the method further includes: The second apparatus obtains the clock signal from a received third optical signal through filtering, where the clock signal obtained through filtering is a signal obtained by transmitting the clock source signal on the transmission link, and the third optical signal is a signal obtained by combining the clock source signal with the downlink digital signal. The second apparatus generates the second optical signal based on the clock signal obtained through filtering.

In this possible implementation, after obtaining, from the third optical signal through filtering, the signal obtained by transmitting the clock source signal on the transmission link, the second apparatus may feed back, to the first apparatus, a clock signal that includes a transmission delay of the transmission link, so that the first apparatus can obtain the first clock signal.

In a possible implementation, the clock source signal is combined with a second frequency band of the downlink digital signal, and that the second apparatus obtains the clock signal from the received third optical signal through filtering includes: The second apparatus obtains the clock source signal from the second frequency band of the downlink digital signal through filtering.

In a possible implementation, the second frequency band includes a second spectral null, the clock source signal is combined with the second spectral null of the downlink digital signal, and the second spectral null is any power valley point other than the power valley point corresponding to the first spectral null on the spectrum of the downlink digital signal.

A third aspect of this application provides a communication system, including: a first apparatus, a transmission link, and a second apparatus. The first apparatus communicates with the second apparatus through the transmission link. The first apparatus generates a first optical signal, where the first optical signal is a signal obtained by combining a first clock signal with a downlink digital signal, and the first clock signal includes a first transmission delay. The second apparatus receives the first optical signal from the first apparatus, where a second clock signal is obtained by transmitting the first clock signal on the transmission link, and a sum of a transmission delay of the transmission link and the first transmission delay is zero. The second apparatus obtains the second clock signal from the first optical signal through filtering. The second apparatus performs time synchronization based on the second clock signal.

In the communication system provided in the third aspect, the first apparatus combines the first clock signal with the downlink digital signal for transmission, and may complete digital-analog hybrid transmission and simultaneous transmission of the clock signal and the downlink digital signal through one transmission link, and an independent clock signal transmission link does not need to be established. In addition, after transmission of the first clock signal on the transmission link, the first transmission delay in the first clock signal transmitted by the first apparatus may be canceled by the transmission delay of the transmission link, and the transmission delay of the transmission link does not need to be measured or calculated, thereby improving accuracy of time synchronization of the second apparatus.

A fourth aspect of this application provides a communication apparatus, including a coupler, a laser, and a circulator.

The coupler is configured to combine a first clock signal with a downlink digital signal to obtain a first coupled signal, where the first clock signal includes a first transmission delay.

The laser is configured to generate a first optical signal based on the first coupled signal.

The circulator is configured to send the first optical signal through a transmission link between a distributed apparatus and a communication apparatus, where a second clock signal is obtained when the first clock signal passes through the transmission link, a sum of a transmission delay of the transmission link and the first transmission delay is zero, and the second clock signal is used by the communication apparatus to perform time synchronization.

In this application, the coupler may combine the digital signal with the clock signal, and may combine the clock signal with a position of the digital signal.

The circulator may separate an uplink optical signal from the downlink optical signal. The circulator may have three or four interfaces. Taking the three interfaces as an example, interface numbers may be respectively an interface 1, an interface 2, and an interface 3. An optical signal input from the interface 1 may be output from the interface 2, and an optical signal input from the interface 2 may be output from the interface 3.

In the fourth aspect, the distributed apparatus may be an O-DU, and the communication apparatus may be an O-RU. The O-DU may combine the first clock signal with the downlink digital signal for transmission, and may complete digital-analog hybrid transmission and simultaneous transmission of the clock signal and the downlink digital signal through one transmission link, and an independent clock signal transmission link does not need to be established. In addition, after transmission of the first clock signal on the transmission link, the first transmission delay in the first clock signal transmitted by the O-DU may be canceled by the transmission delay of the transmission link, and the transmission delay of the transmission link does not need to be measured or calculated, thereby improving accuracy of time synchronization of the O-RU.

In a possible implementation, the first clock signal is combined with a first frequency band of the downlink digital signal.

In a possible implementation, the first frequency band includes a first spectral null, the first clock signal is combined with the first spectral null of the downlink digital signal, and the first spectral null is any power valley point on a spectrum of the downlink digital signal.

In a possible implementation, the transmission link is an optical fiber link.

In a possible implementation, the communication apparatus further includes a photoelectric detector, a first filter, a frequency multiplier, and a signal processing component.

The photoelectric detector is configured to convert a second optical signal received by the circulator into an electrical signal.

The first filter is configured to obtain a third clock signal from the electrical signal through filtering, where the third clock signal is a clock signal obtained by transmitting a clock source signal on the transmission link in a round-trip manner.

The frequency multiplier is configured to perform frequency multiplication on the clock source signal to obtain a fourth clock source signal.

The signal processing component is configured to process the third clock signal and the fourth clock signal to obtain the first clock signal.

In this possible implementation, the first filter may be a band-pass filter, and may generally obtain a signal with a high frequency through filtering. The frequency multiplier may amplify a frequency of a signal, for example, amplify the frequency of the signal by twice, three times, or more times. The amplification multiple depends on a frequency multiplication capability of the frequency multiplier. The signal processing component may be a combination of two or more devices, or may be one device.

In a possible implementation, the signal processing component includes a frequency mixer, a second filter, and a frequency divider.

The frequency mixer is configured to perform frequency mixing on the third clock signal and the fourth clock signal to obtain a phase difference clock signal between the third clock signal and the fourth clock signal.

The second filter is configured to obtain, through filtering, the phase difference clock signal from a signal output by the frequency mixer.

The frequency divider is configured to perform frequency division on the phase difference clock signal to obtain the first clock signal.

In this possible implementation, the frequency mixer may perform difference or summation on two signals. The second filter may be a band-pass filter, and the band-pass filter may obtain the phase difference clock signal through filtering. The frequency divider may reduce a frequency of a signal, for example, reduce the frequency of the signal to half of the original frequency or another value. A frequency reduction degree depends on a frequency reduction capability of the frequency divider.

In a possible implementation, the distributed apparatus further includes a clock source module.

The clock source module is configured to output the clock source signal.

The coupler is further configured to combine the clock source signal with the downlink digital signal to obtain a second coupled signal.

The laser is further configured to generate a third optical signal based on the second coupled signal.

The circulator is further configured to send the third optical signal through the transmission link.

In this possible implementation, the clock source module may receive a global positioning system (global positioning system, GPS) clock source signal.

In a possible implementation, the clock source signal is combined with a second frequency band of the downlink digital signal.

In a possible implementation, the second frequency band includes a second spectral null, the clock source signal is combined with the second spectral null of the downlink digital signal, and the second spectral null is any power valley point other than the power valley point corresponding to the first spectral null on the spectrum of the downlink digital signal.

A fifth aspect of this application provides a communication apparatus, including a circulator, a photoelectric detector, a first filter, and a time synchronization module.

The circulator is configured to receive a first optical signal from the communication apparatus through a transmission link connected to the communication apparatus, where the first optical signal is a signal obtained by combining a first clock signal with a downlink digital signal, the first clock signal includes a first transmission delay, and a second clock signal is obtained by transmitting the first clock signal on the transmission link.

The photoelectric detector is configured to convert the first optical signal into a first electrical signal.

The first filter is configured to obtain the second clock signal from the first electrical signal through filtering.

The time synchronization module is configured to perform time synchronization based on the second clock signal.

In the fifth aspect, the first filter may be a band-pass filter.

In the fifth aspect, because the first transmission delay has been canceled in a process in which the first clock signal is transmitted on the transmission link, the second clock signal has no transmission delay. A second apparatus may use the second clock signal to perform time synchronization, thereby improving accuracy of the time synchronization.

In a possible implementation, the second clock signal is combined with a first frequency band of the downlink digital signal, and the first filter is configured to obtain the second clock signal from the first frequency band through filtering.

In a possible implementation, a second frequency band includes a second spectral null, a clock source signal is combined with the second spectral null of the downlink digital signal, and the first spectral null is any power valley point on a spectrum of the downlink digital signal.

In a possible implementation, the transmission link is an optical fiber link.

In a possible implementation, the circulator is further configured to send a second optical signal through the transmission link, where the second optical signal includes a clock signal obtained by transmitting the clock source signal on the transmission link.

In a possible implementation, the communication apparatus further includes a second filter, a coupler, and a laser.

The circulator is further configured to receive a third optical signal through the transmission link, where the third optical signal is a signal obtained by combining the clock source signal with the downlink digital signal.

The photoelectric detector is further configured to convert the third optical signal into a second electrical signal.

The second filter is configured to obtain the clock source signal from the second electrical signal through filtering, where the clock signal obtained through filtering is a signal obtained by transmitting the clock source signal on the transmission link.

The coupler is configured to couple and filter the clock source signal and a first uplink digital signal to obtain a coupled signal.

The laser is configured to generate the second optical signal based on the coupled signal.

In this possible implementation, the second filter may be a band-pass filter, and a frequency range obtained through filtering performed by the band-pass filter is different from a frequency range obtained through filtering performed by the first filter.

In a possible implementation, the clock source signal is combined with the second frequency band of the downlink digital signal, and a frequency of the second frequency band is different from a frequency of the first frequency band.

The second filter is configured to obtain the clock signal from the second frequency band of the downlink digital signal through filtering.

In a possible implementation, the second frequency band includes a second spectral null, the clock source signal is combined with the second spectral null of the downlink digital signal, and the second spectral null is any power valley point other than the power valley point corresponding to the first spectral null on the spectrum of the downlink digital signal.

A sixth aspect of this application provides a communication system, including a first apparatus, a transmission link, and a second apparatus. The first apparatus communicates with the second apparatus through the transmission link, the first apparatus is the communication apparatus according to any one of the third aspect or the possible implementations of the third aspect, and the second apparatus is the communication apparatus according to any one of the fourth aspect or the possible implementations of the fourth aspect.

A seventh aspect of this application provides a communication apparatus, including a communication interface, a processor, and a memory. The communication interface and the processor are coupled to the memory, the memory is configured to store a program or instructions, and when the program or the instructions are executed by the processor, the communication apparatus is enabled to perform the method according to any one of the first aspect or the possible implementations of the first aspect.

An eighth aspect of this application provides a communication apparatus, including a communication interface, a processor, and a memory. The communication interface and the processor are coupled to the memory, the memory is configured to store a program or instructions, and when the program or the instructions are executed by the processor, the communication apparatus is enabled to perform the method according to any one of the second aspect or the possible implementations of the second aspect.

A ninth aspect of this application provides a computer-readable storage medium. The computer-readable storage medium stores instructions, and when the instructions are run on a computer device, the computer device is enabled to perform the method according to any one of the first aspect or the possible implementations of the first aspect.

A tenth aspect of this application provides a computer-readable storage medium. The computer-readable storage medium stores instructions, and when the instructions are run on a computer device, the computer device is enabled to perform the method according to any one of the second aspect or the possible implementations of the second aspect.

An eleventh aspect of this application provides a computer program product. The computer program product includes computer program code, and when the computer program code is run on a computer device, the computer device is enabled to perform the method according to any one of the first aspect or the possible implementations of the first aspect.

A twelfth aspect of this application provides a computer program product. The computer program product includes computer program code, and when the computer program code is run on a computer device, the computer device is enabled to perform the method according to any one of the second aspect or the possible implementations of the second aspect.

A thirteenth aspect of this application provides a computer program product, and a chip system. The chip system includes one or more interface circuits and one or more processors. The interface circuit and the processor are interconnected through a line. The interface circuit is configured to receive a signal from a memory of a communication apparatus, and send the signal to the processor, where the signal includes computer instructions stored in the memory. When the processor executes the computer instructions, the chip system performs the method according to any one of the first aspect or the possible implementations of the first aspect.

A fourteenth aspect of this application provides a computer program product, and a chip system. The chip system includes one or more interface circuits and one or more processors. The interface circuit and the processor are interconnected through a line. The interface circuit is configured to receive a signal from a memory of a communication apparatus, and send the signal to the processor, where the signal includes computer instructions stored in the memory. When the processor executes the computer instructions, the chip system performs the method according to any one of the second aspect or the possible implementations of the second aspect.

In this application, for technical effects in any one of the third aspect to the fourth aspect and the possible implementations thereof, refer to the technical effects in the first aspect, the second aspect, and the possible implementations thereof for understanding.

**BRIEF DESCRIPTION OF DRAWINGS**

To describe the technical solutions in embodiments of this application more clearly, the following briefly describes the accompanying drawings for describing embodiments. It is clear that the accompanying drawings in the following description show merely some embodiments of this application, and a person skilled in the art may still derive other drawings from these accompanying drawings without creative efforts.

FIG. 1A is a diagram of an architecture of a communication system according to an embodiment of this application;

FIG. 1B is a diagram of another architecture of a communication system according to an embodiment of this application;

FIG. 2 is a diagram of a communication method according to an embodiment of this application;

FIG. 3A is a diagram of a spectrum of a downlink digital signal according to an embodiment of this application;

FIG. 3B is a diagram of a spectrum obtained by combining a downlink digital signal with a clock signal according to an embodiment of this application;

FIG. 4 is a diagram of another communication method according to an embodiment of this application;

FIG. 5A is a diagram of a spectrum in which a downlink digital signal and a clock source signal are combined according to an embodiment of this application;

FIG. 5B is a diagram of another spectrum in which an uplink digital signal and a clock signal are combined according to an embodiment of this application;

FIG. 6A(1) and FIG. 6A(2) are a diagram of another architecture of a communication system according to an embodiment of this application;

FIG. 6B(1) and FIG. 6B(2) are a diagram of another architecture of a communication system according to an embodiment of this application;

FIG. 7 is a diagram of a structure of a communication apparatus according to an embodiment of this application;

FIG. 8 is a diagram of another structure of a communication apparatus according to an embodiment of this application;

FIG. 9 is a diagram of another structure of a communication apparatus according to an embodiment of this application; and

FIG. 10 is a diagram of another structure of a communication apparatus according to an embodiment of this application.

**DESCRIPTION OF EMBODIMENTS**

Embodiments of this application provide a communication method, to improve accuracy of time synchronization. This application further provides a corresponding apparatus and system. The following separately provides detailed descriptions.

The following clearly and completely describes the technical solutions in embodiments of this application with reference to the accompanying drawings in embodiments of this application. Apparently, the described embodiments are merely some rather than all of embodiments of this application. All other embodiments obtained by a person skilled in the art based on embodiments of this application without creative efforts shall fall within the protection scope of this application.

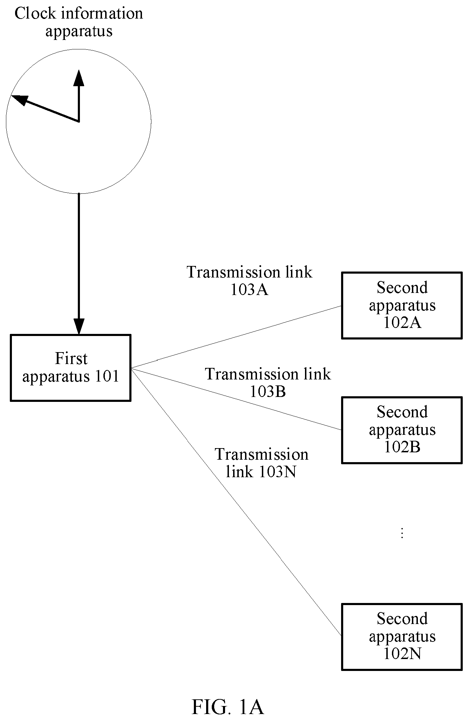

FIG. 1A is a diagram of an architecture of a communication system according to an embodiment of this application.

Refer to FIG. 1A. The communication system provided in this embodiment of this application includes a first apparatus 101, a second apparatus 102A, a second apparatus 102B, ..., and a second apparatus 102N. The first apparatus 101 is connected to the second apparatus 102A through a transmission link 103A, the first apparatus 101 is connected to the second apparatus 102B through a transmission link 103B, ..., and the first apparatus 101 is connected to the second apparatus 102N through a transmission link 103N. The transmission link 103A, the transmission link 103B, ..., and the transmission link 103N may be optical fiber links. Definitely, these transmission links may alternatively be non-optical fiber links, for example, coaxial cables.

The first apparatus 101 may obtain a clock source signal from a clock information apparatus, and then transmit the clock source signal to the second apparatus 102A through the transmission link 103A, transmit the clock source signal to the second apparatus 102B through the transmission link 103B, ..., and transmit the clock source signal to the second apparatus 102N through the transmission link 103N. Different second apparatuses perform time synchronization based on the received clock source signal. The clock information apparatus may provide any one of the following clock source signals: a beidou navigation satellite system (Bei-Dou Navigation Satellite System, BDS), a global positioning system (Global Positioning System, GPS) of the United States, a global navigation satellite system of Russian (Global Navigation Satellite System, GLONASS), a galileo navigation system of the European Union (Galileo Navigation Satellite System, GALILEO), and a quasi-zenith satellite system (Quasi-Zenith Satellite System, QZSS).

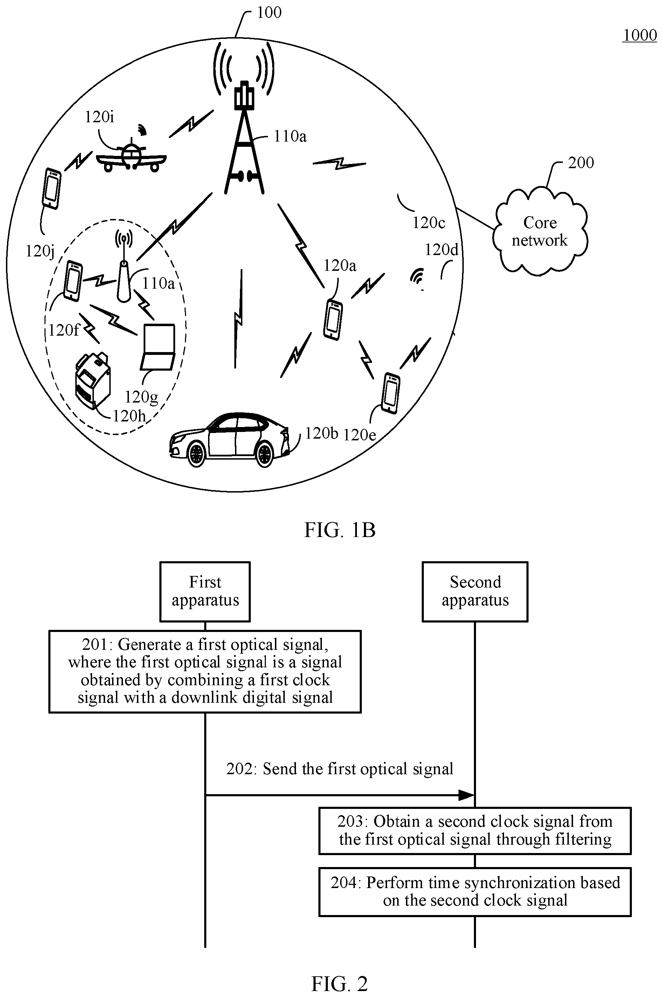

FIG. 1B is a diagram of another architecture of a communication system according to an embodiment of this application.

As shown in FIG. 1B, the communication system 1000 includes a radio access network (radio access network, RAN) 100 and a core network (core network, CN) 200. The RAN 100 includes at least one RAN node (for example, 110a and 110b in FIG. 1B, collectively referred to as 110) and at least one terminal (for example, 120a to 120j in FIG. 1B, collectively referred to as 120). The RAN 100 may also include another RAN node, for example, a wireless relay device and/or a wireless backhaul device (not shown in FIG. 1B). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or a future-oriented evolved system (for example, a 6th generation (6th generation, 6G) mobile communication system). The RAN 100 may alternatively be an open RAN (open RAN, O-RAN or ORAN), or a cloud radio access network (cloud radio access network, CRAN). Alternatively, the RAN 100 may be a communication system that integrates the foregoing two or more systems.

The RAN node 110 may also be sometimes referred to as an access network device, a RAN entity, an access node, or the like, and forms a part of a communication system, to help a terminal implement radio access. A plurality of RAN nodes 110 in the communication system 1000 may be nodes of a same type, or may be nodes of different types. In some scenarios, a role of the RAN node 110 and the terminal 120 are relative. For example, a network element 120i in FIG. 1B may be a helicopter or an uncrewed aerial vehicle, and may be configured as a mobile base station. For the terminal 120j that accesses the RAN 100 through the network element 120i, the network element 120i is a base station. However, for a base station 110a, the network element 120i is a terminal. Both the RAN node 110 and the terminal 120 are sometimes referred to as communication apparatuses. For example, the network element 110a and the network element 110b in FIG. 1B may be understood as communication apparatuses with a base station function, and a network element 120a to a network element 120j may be understood as communication apparatuses with a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The RAN node may be a macro base station (for example, the 110a in FIG. 1B), a micro base station or an indoor base station (for example, the 110b in FIG. 1B), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination thereof.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In the communication system in FIG. 1A or FIG. 1B, when clock synchronization is performed, the clock source signal needs to be transmitted through the transmission link, and a transmission delay is generated in a transmission process. This affects accuracy of the time synchronization. To improve the accuracy of the time synchronization, embodiments of this application provide a communication method based on the communication system shown in FIG. 1A or FIG. 1B. The following describes the communication method with reference to the accompanying drawings.

In embodiments of this application, a first apparatus may be a distributed unit (distributed unit, DU), and a second apparatus may be a radio unit (radio unit, RU). In another communication system in which time synchronization needs to be performed, the first apparatus and the second apparatus may alternatively be other apparatuses. This is not limited in this application.

FIG. 2 is a diagram of a communication method according to an embodiment of this application. Refer to FIG. 2. The method may include the following steps.

201: A first apparatus generates a first optical signal, where the first optical signal is a signal obtained by combining a first clock signal with a downlink digital signal.

In this application, the first optical signal is a signal obtained through hybrid transmission of the first clock signal and the downlink digital signal. The first clock signal includes a first transmission delay. The hybrid transmission refers to transmission in a hybrid manner, and may be understood as combining the first clock signal with a position on a spectrum of the downlink digital signal, and then transmitting a combined signal as a whole.

In this application, the first clock signal may be an analog signal. In a phase representation form of the first clock signal, the first transmission delay may be understood as an opposite number of a transmission delay of a transmission link. In this application, the transmission delay of the transmission link is a delay generated during one-way transmission of a signal on the transmission link.

The first clock signal may be obtained by performing one time of round-trip transmission of a clock source signal on the transmission link. If a phase of the clock source signal is represented as $\varphi = \cos(\omega_0 t + \varphi_0)$, a phase of the first clock signal may be represented as

$$\varphi' = \cos\left(\frac{2\omega_0}{N}(t - \tau(t)) + \frac{2\varphi_0}{N}\right). \ \varphi \text{ represents the phase}$$

of the clock source signal, $\varphi'$ represents the phase of the first clock signal, $\varphi_0$ represents an initial phase, $\omega_0$ represents an initial frequency, t represents a moment, $\tau(t)$ represents a transmission delay of the transmission link at a moment t, and $-\tau(t)$ represents the first transmission delay. $\frac{2}{N}$ represents a coefficient of $\omega_0$, and $N$ may be understood as a coefficient of a frequency divider. A value of $N$ may be an integer greater than 2, or definitely, $N$ may be equal to 1 or a positive number less than 1. A function of $\frac{2}{N}$ may be understood as performing frequency reduction or frequency increase on $\omega_0$. In the phase

relational expression, generally $N \neq 2$. In this way, a frequency of the first clock signal may be different from a frequency of the clock source signal, and a second apparatus may effectively distinguish between the first clock signal and the clock source signal.

The first clock signal described above is obtained by performing one time of round-trip transmission of the clock source signal on the transmission link. It may be understood that the first clock signal may alternatively be obtained by performing at least two times of round-trip transmission of the clock source signal on the transmission link. Two times of round-trip transmission are used as an example. If a phase of the clock source signal is represented as $\varphi = \cos(\omega_0 t + \varphi_0)$, a phase of the first clock signal may be represented as

$$\varphi' = \cos\left(\frac{4\omega_0}{N}(t - \tau(t)) + \frac{4\varphi_0}{N}\right).$$ $\frac{4}{N}$ represents a coefficient of $\omega_0$, and $N$ may be understood as a coefficient of a frequency divider. A value of $N$ may be an integer greater than 4. Definitely, N may alternatively be equal to 1, 2, or 3, or a positive number less than 1. A function of $\frac{4}{N}$ may be understood as performing frequency reduction or frequency increase on $\omega_0$. In the phase relational expression, generally $N \neq 4$. In this way, a frequency of the first clock signal may be different from a frequency of the clock source signal, and a second apparatus may effectively distinguish between the first clock signal and the clock source signal.

In this embodiment of this application, the first clock signal including $-\tau(t)$ may be obtained regardless of a quantity of times of round-trip transmission of the clock source signal on the transmission link, and only coefficients of $\omega_0$ are different.

202: The first apparatus sends the first optical signal. Correspondingly, the second apparatus receives the first optical signal.

A second clock signal is obtained by transmitting the first clock signal on the transmission link between the first apparatus and the second apparatus, and a sum of the transmission delay of the transmission link and the first transmission delay is zero.

A phase representation form of the second clock signal may be represented as $\varphi'' = \cos\left(\frac{2\omega_0}{N}(t) + \frac{2\varphi_0}{N}\right)$. It can be learned from the relational expression of $\varphi''$ that the transmission delay of the transmission link is canceled, and the second apparatus is not affected by the transmission delay of the transmission link when performing time synchronization.

Optionally, the transmission link may be an optical fiber link.

203: The second apparatus obtains the second clock signal from the first optical signal through filtering.

204: The second apparatus performs the time synchronization based on the second clock signal.

In this embodiment of this application, after the second clock signal is obtained, the second clock signal may be directly used to perform time synchronization, or frequency processing may be performed on the second clock signal. If $\frac{2}{N}$ is less than 1, frequency multiplication processing may be performed on the second clock signal. If $\frac{2}{N}$ is greater than 1, frequency reduction processing may be performed on the second clock signal. In this way, a processed clock signal used for the time synchronization and the clock source signal are clock signals with a same frequency and a same phase. This is more conducive to improving accuracy of the time synchronization.

It can be learned from the foregoing solution that, the first apparatus combines the first clock signal with the downlink digital signal for transmission, and may complete digital-analog hybrid transmission and simultaneous transmission of the clock signal and the downlink digital signal through one transmission link. In this way, accuracy of time synchronization is improved, and an independent clock signal transmission link does not need to be established. This can reduce optical transceiver modules in the first apparatus and the second apparatus, for example, a laser and a circulator, and further reduce use of an optical fiber, so that deployment difficulty of a communication system is reduced, and complexity of the communication system is reduced. In addition, after transmission of the first clock signal on the transmission link, the first transmission delay in the first clock signal transmitted by the first apparatus may be canceled by the transmission delay of the transmission link, and the transmission delay of the transmission link does not need to be measured or calculated, thereby improving the accuracy of the time synchronization of the second apparatus.

Optionally, in the foregoing solution, that the first clock signal is combined with the downlink digital signal may be that the first clock signal is combined with a first frequency band of the downlink digital signal. The first frequency band may be a pre-specified frequency band on the spectrum of the downlink digital signal. The first frequency band may include one or more frequencies, where the one or more frequencies may include a first spectral null, and the first spectral null may be any power valley point on the spectrum of the downlink digital signal. The first clock signal may be combined with the first spectral null in the first frequency band, or may be combined with one or more frequencies other than the first spectral null. This is not limited in this application.

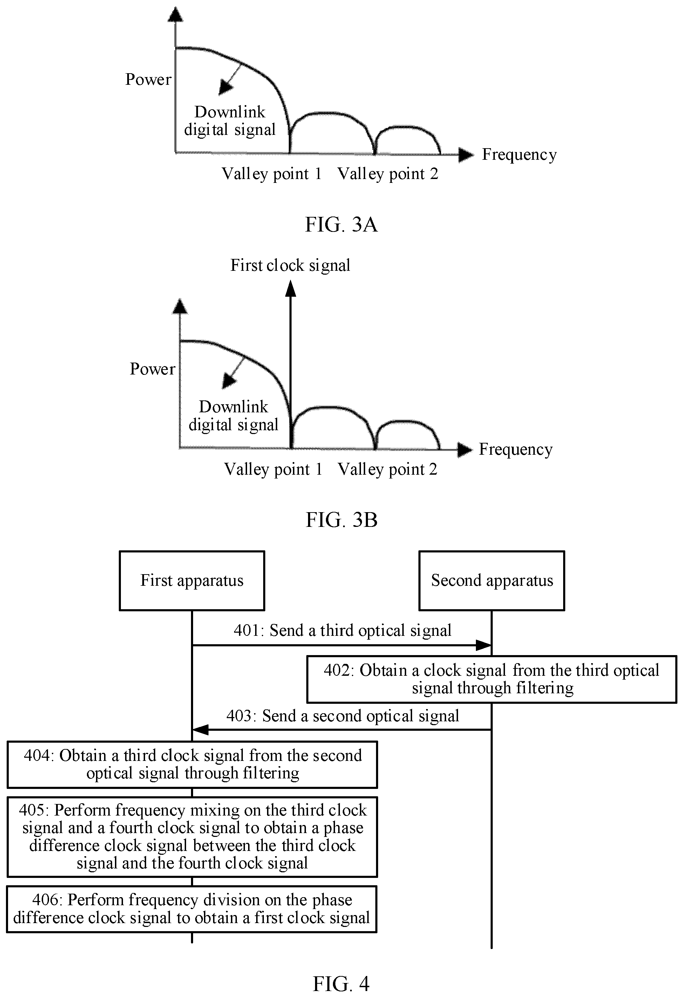

For example, the first spectral null is any power valley point on the spectrum of the downlink digital signal. FIG. 3A is a diagram of a spectrum of a downlink digital signal, and FIG. 3B is a diagram of another spectrum obtained by combining a first clock signal with a downlink digital signal.

In this embodiment of this application, a downlink digital signal or an uplink digital signal after sampling, quantizing, and coding is generally transmitted by using a digital modulation format, for example, a most common non-return-to-zero (Non-Return-to-Zero, NRZ) code pattern. Definitely, the downlink digital signal or the uplink digital signal after sampling, quantizing, and encoding in this application is not limited to being transmitted by using the NRZ code pattern, and another code pattern with a spectrum structure may be used to perform digital-analog hybrid transmission with the clock signal.

In FIG. 3A, the NRZ code pattern is used as an example. Powers of the spectrum of the downlink digital signal at different frequency positions are different. As a frequency changes, a plurality of troughs appear on the spectrum, and a frequency at a trough position may be referred to as a spectral null or a valley point, for example, a valley point 1 and a valley point 2 shown in FIG. 3A. A frequency at the valley point 1 is lower than a frequency at the valley point 2. For a downlink digital signal or an uplink digital signal, a valley point generally appears periodically. If the frequency at the valley point 1 is represented by x gigahertz (gigahertz, GHz), the frequency at the valley point 2 is 2x (GHz). If the spectrum continues to be extended, frequencies at subsequent valley points are all integer multiples of x. It can be learned that a frequency at each valley point may be represented as nx (GHz), where n is a positive integer.

Generally, energy of a digital signal at a valley point is weak. As shown in FIG. 3B, a first clock signal may be combined with a valley point 1 in a first frequency band. In this way, the first clock signal and the downlink digital signal do not interfere with each other after being combined, and spectrum resources can be fully used. The second optical signal is obtained by transmitting the first clock signal on the transmission link. After receiving the first optical signal, the second apparatus may obtain the second clock signal from the valley point 1 of the downlink digital signal through filtering. It should be noted that, the first clock signal being combined with the valley point 1 is merely an example. Alternatively, the first clock signal may be combined with another frequency in the first frequency band. Both of them can implement digital-analog hybrid transmission of the first clock signal and the downlink digital signal.

Optionally, the first clock signal may be obtained by the first apparatus by using a third clock signal and a fourth clock signal. The third clock signal is obtained by the first apparatus from the second optical signal of the second apparatus through filtering, the third clock signal is a clock signal obtained by transmitting the clock source signal on the transmission link in a round-trip manner, and the fourth clock signal is a frequency multiplied signal of the clock source signal.

With reference to the accompanying drawings, the following describes a process of obtaining the third clock signal and the fourth clock signal based on the clock source signal to further obtain the first clock signal.

FIG. 4 is a diagram of another communication method according to an embodiment of this application. Refer to FIG. 4. The method may include the following steps.

401: A first apparatus sends a third optical signal to a second apparatus, where the third optical signal is a signal obtained by combining a clock source signal with a downlink digital signal. Correspondingly, the second apparatus receives the third optical signal from the first apparatus.

As described above, first clock signals in different phase forms may be obtained by performing one or more times of round-trip transmission of the clock source signal $\varphi = \cos(\omega_0 t + \varphi_0)$ on a transmission link. One time of round-trip transmission is used as an example. A phase form of the first clock signal is

$$\varphi' = \cos\left(\frac{2\omega_0}{N}(t - \tau(t)) + \frac{2\varphi_0}{N}\right)$$ . For a form of the downlink digital signal, refer to the descriptions in FIG. 3A. The clock source signal may be combined with a second frequency band of the downlink digital signal. The second frequency band may include one or more frequencies, where the one or more frequencies may include a second spectral null, and the second spectral null may be any power valley point on a spectrum of the downlink digital signal. The clock source signal may be combined with the second spectral null in the second frequency band, or may be combined with one or more frequencies other than the second spectral null. This is not limited in this application.

In this application, the second frequency band may or may not overlap a first frequency band. To cause the second apparatus to better distinguish between a signal generated by performing the transmission of the clock source signal on the transmission link and a second clock signal, the second frequency band generally does not overlap the first frequency band. When a frequency range of the first frequency band is (x-p) GHz to (x+q) GHz, a frequency range of the second frequency band may be (2x-p) GHz to (2x+q) GHz. Definitely, the frequency range of the second frequency band may alternatively be another value interval. This is not limited in this application.

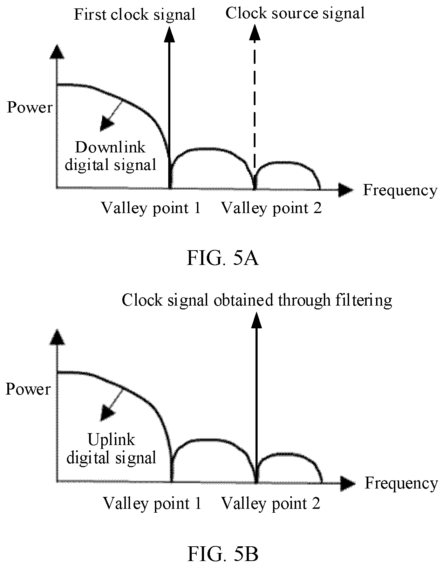

As described above, the first clock signal may be combined with a first spectral null on the spectrum of the downlink digital signal, and the clock source signal may be combined with the second spectral null on the spectrum of the downlink digital signal. The second spectral null may be any power valley point other than the power valley point corresponding to the first spectral null on the spectrum of the downlink digital signal, for example, the valley point 2 in FIG. 3B. For a combined signal when the clock source signal is combined with the valley point 2 on the spectrum of the downlink digital signal, refer to the descriptions in FIG. 5A.

Definitely, the clock source signal may alternatively be combined with one or more frequencies other than the second spectral null in the second frequency band. This is not limited in this application.

402: The second apparatus obtains a clock signal from the third optical signal through filtering, where the clock signal obtained through filtering is a signal obtained by transmitting the clock source signal on the transmission link.

The clock signal obtained through filtering may be represented as $\varphi''' = \cos(\omega_0(t + \tau(t) + \varphi_0)$, and includes a transmission delay $\tau$ of the transmission link.

403: The second apparatus sends a second optical signal to the first apparatus through the transmission link, where the second optical signal is a signal obtained by combining, with an uplink digital signal, the clock signal obtained through filtering.

In this embodiment of this application, the clock signal obtained through filtering may be combined with a frequency band on a spectrum of the uplink digital signal or one or more frequencies in the frequency band. FIG. 5B is used as an example. The clock signal obtained through filtering is combined with a valley point 2 of the uplink digital signal.

404: The first apparatus obtains a third clock signal from the second optical signal through filtering.

A phase of the third clock signal may be represented as $\varphi4 = \cos(\omega_0(t + 2\tau(t)) + \varphi_0)$.

In this embodiment of this application, the third clock signal may include twice the transmission delay of the transmission link, that is, $2\tau(t)$. It should be noted that, if the third clock signal is obtained by performing n times of round-trip transmission of the clock source signal, the third clock signal may alternatively include 2n times the transmission delay of the transmission link, that is, $2n\tau(t)$.

405: The first apparatus performs frequency mixing on the third clock signal and a fourth clock signal to obtain a phase difference clock signal between the third clock signal and the fourth clock signal.

In this embodiment of this application, the fourth clock signal may be a frequency-tripled signal of the clock source signal, or definitely, may be a frequency multiplied signal of another multiple, provided that the first clock signal including a first transmission delay can be obtained by performing processing, such as performing frequency mixing or performing frequency mixing and then frequency division on the third clock signal and the fourth clock signal. In this application, a multiple of the transmission delay of the transmission link in the third clock signal and a multiple of a frequency of the fourth clock signal for that of the clock source signal are not limited.

If the fourth clock signal is the frequency-tripled signal of the clock source signal, a phase of the fourth clock signal may be represented as $\varphi5 = \cos(3\omega_0 t + 3\varphi_0)$.

The phase difference clock signal $\varphi6= \cos(2\omega_0(t-\tau(t)) + 2\varphi_0)$ can be obtained by performing frequency mixing on $\varphi4$ and $\varphi5$.

406: The first apparatus performs frequency division on the phase difference clock signal to obtain the first clock signal.

A frequency of the clock signal may be reduced through frequency division, so that the first clock signal may be within a spectrum range of the downlink digital signal. If a transmission bandwidth of the transmission link is large enough, frequency division may not be performed.

If frequency division is performed on $\varphi6=\cos(2\omega_0(t-\tau(t)) + 2\varphi_0)$ according to $N$, the first clock signal

$$\varphi' = \cos\left(\frac{2\omega_0}{N}(t-\tau(t)) + \frac{2\varphi_0}{N}\right)$$ may be obtained. $N$ is a coefficient of a frequency divider, and $\frac{2}{N}$ is a coefficient that is of $\omega_0$ and that is obtained by performing frequency division on $\varphi6$ by the frequency divider.

Then, one time of time synchronization of the second apparatus is completed with reference to the descriptions of the embodiment corresponding to FIG. 2. It can be learned from the descriptions in FIG. 3B that a time synchronization process provided in embodiments of this application may be repeatedly performed, thereby further improving accuracy of time synchronization.

An embodiment of this application further provides another communication system. The communication system includes a first apparatus and at least one second apparatus. The first apparatus is connected to each second apparatus through a transmission link. The transmission link may be an optical fiber link. For an architecture of the communication system, refer to FIG. 1A for understanding.

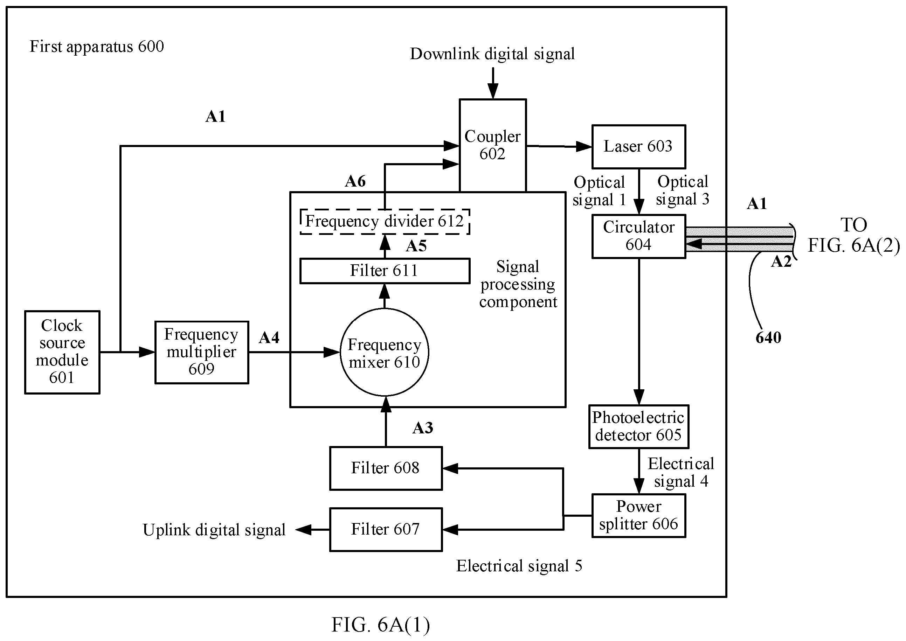

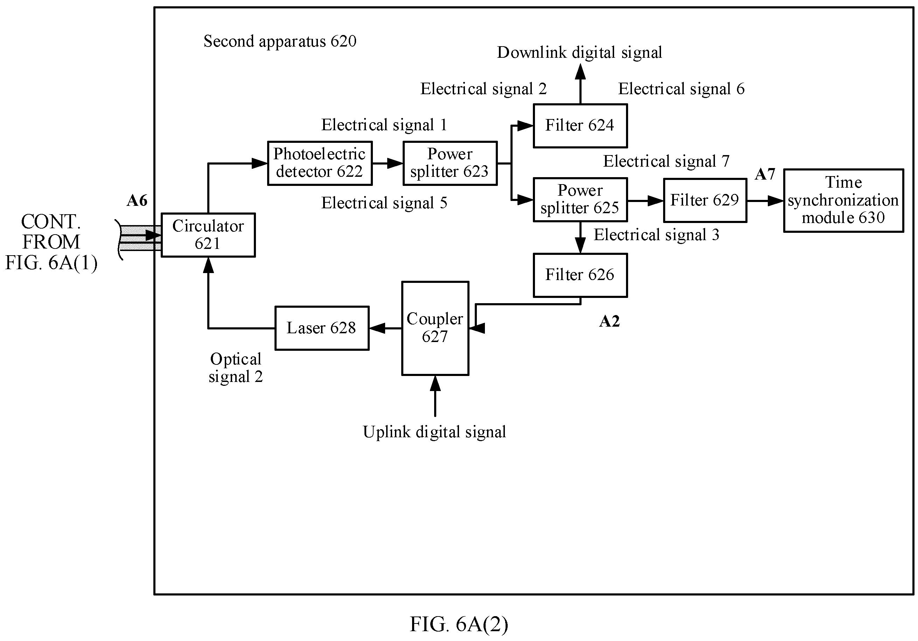

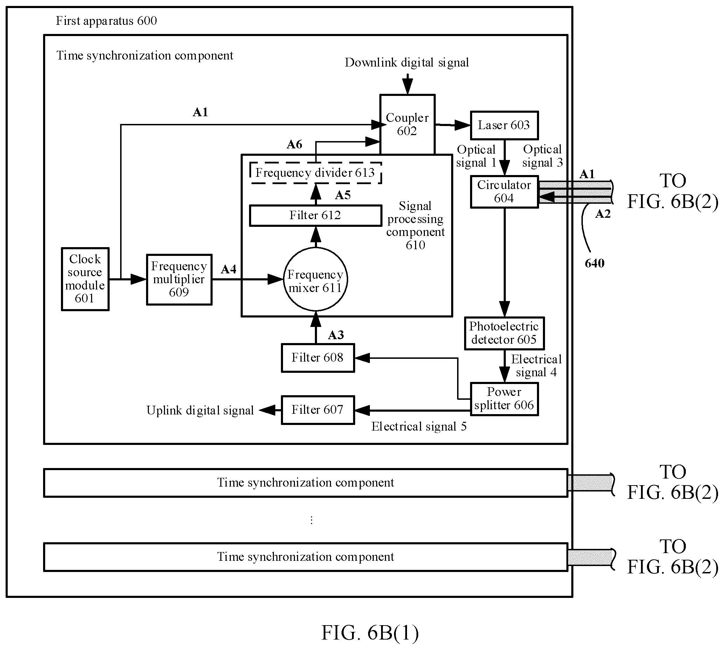

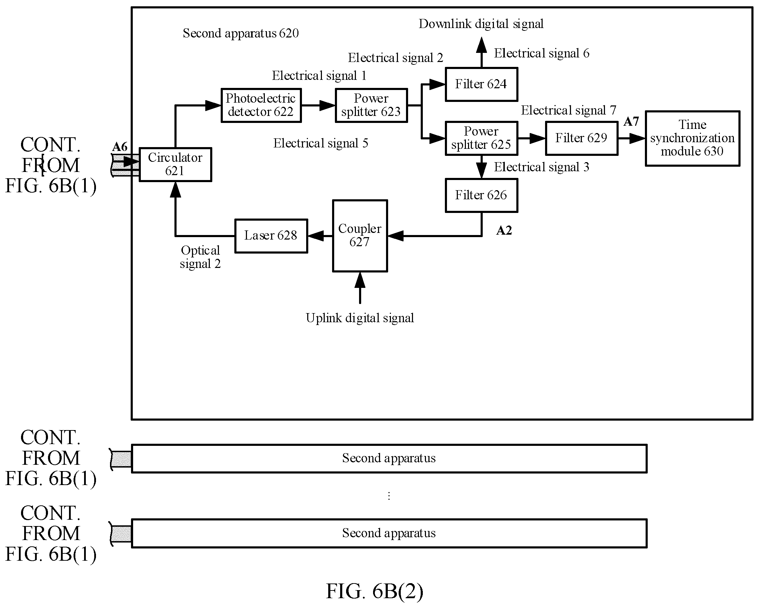

Based on the communication system shown in FIG. 1A, and further with reference to FIG. 6A(1) and FIG. 6A(2) as well as FIG. 6B(1) and FIG. 6B(2), the communication system provided in embodiments of this application and a time synchronization process based on the communication system may be further understood.

FIG. 6A(1) and FIG. 6A(2) are a diagram of another architecture of a communication system according to an embodiment of this application. Refer to FIG. 6A(1) and FIG. 6A(2). The communication system includes a first apparatus 600 and a second apparatus 620. The first apparatus 600 is connected to the second apparatus 620 through an optical fiber link 640.

The first apparatus 600 may include a clock source module 601, a coupler 602, a laser 603, a circulator 604, a photoelectric detector 605, a power splitter 606, a filter 607, a filter 608, a frequency multiplier 609, and a signal processing component 610. The signal processing component 610 may include a frequency mixer 611 and a filter 612, and may further include a frequency divider 613. If a bandwidth of the optical fiber link 640 is large enough and frequency reduction does not need to be performed on a signal, the frequency divider may not be included. Definitely, the signal processing component 610 may alternatively be implemented by using a combination of other devices provided that frequency mixing and filtering processing on a signal can be implemented. This is not limited in this application. The filter 607 may be a low-pass filter, and is configured to filter an uplink digital signal. The filter 608 and the filter 612 may be band-pass filters. The two band-pass filters are configured to obtain clock signals through filtering, and frequencies of the clock signals obtained through filtering may be different.

The second apparatus 620 may include a circulator 621, a photoelectric detector 622, a power splitter 623, a filter 624, a power splitter 625, a filter 626, a coupler 627, a laser 628, a filter 629, and a time synchronization module 630. The filter 624 may be a low-pass filter, and is configured to filter a downlink digital signal. The filter 626 and the filter 629 may be band-pass filters. The two band-pass filters are configured to obtain clock signals through filtering, and frequencies of the clock signals obtained through filtering may be different.

In a time synchronization process, the clock source module 601 provides a clock source signal A1, where the clock source signal A1 may be obtained by the clock source module 601 from a GPS clock. A phase representation form of the clock source signal A1 may be:

$$A1 = \cos(\omega_0 t + \varphi_0).$$

$\varphi_0$ represents an initial phase, $\omega_0$ represents an initial frequency, and t represents a moment.

The clock source module 601 provides the clock source signal A1 for the coupler 602. The coupler 602 couples the clock source signal A1 with the downlink digital signal, and may combine the clock source signal A1 with a second frequency band on a spectrum of the downlink digital signal, or on one or more frequencies in the second frequency band, for example, combine the clock source signal A1 with a valley point 2 in the second frequency band on the spectrum of the downlink digital signal, and then a coupled signal is provided for the laser 603. The laser 603 converts the coupled signal into an optical signal 1 and transmits the optical signal 1 to the circulator 604. The circulator 604 transmits the optical signal 1 to the second apparatus 620 through the optical fiber link 640.

After receiving the optical signal 1, the circulator 621 in the second apparatus 620 sends the optical signal 1 to the photoelectric detector 622. The photoelectric detector 622 converts the optical signal 1 into an electrical signal 1. Then, the photoelectric detector 622 transmits the electrical signal 1 to the power splitter 623. The power splitter 623 performs power division on the electrical signal 1 to obtain electrical signals 2. The power splitter 623 transmits the electrical signals 2 to the filter 624 and the power splitter 625. The filter 624 may obtain the downlink digital signal from the received electrical signal 2 through filtering. The power splitter 625 performs power division on the received electrical signal 2 to obtain electrical signals 3, and then transmits the electrical signals 3 to the filter 626 and the filter 629. The clock signal cannot be obtained from the electrical signal 3 through filtering by using a frequency of the filter 629, and the filter 626 may obtain a clock signal A2 from the electrical signal 3 through filtering. A phase representation form of the clock signal A2 may be represented as:

$$A2 = \cos(\omega_0(t + \tau(t)) + \varphi_0).$$

$\tau$ represents a transmission delay of the optical fiber link.

The filter 626 transmits the clock signal A2 to the coupler 627, and the coupler 627 couples the clock signal A2 with the uplink digital signal to obtain a coupled signal. For this process, refer to a process of coupling the downlink digital signal with the clock source signal A1.

The coupler 627 transmits the coupled signal to the laser 628. The laser 628 converts the coupled signal into an optical signal 2, and then transmits the optical signal to the circulator 621. The circulator 621 transmits the optical signal 2 to the first apparatus 600 through the optical fiber link.

After receiving the optical signal 2, the circulator 604 in the first apparatus 600 transmits the optical signal 2 to the photoelectric detector 605. The photoelectric detector 605 converts the optical signal 2 into an electrical signal 4, and the photoelectric detector 605 transmits the electrical signal 4 to the power splitter 606. The power splitter 606 performs power division on the electrical signal 4 to obtain electrical signals 5, and then transmits the electrical signals 5 to the filter 607 and the filter 608. The filter 607 may obtain the uplink digital signal from the electrical signal 5 through filtering. The filter 608 may obtain a clock signal A3 from the electrical signal 5 through filtering. A phase representation form of the clock signal A3 may be represented as:

$$A3 = \cos(\omega_0(t + 2\tau(t)) + \varphi_0).$$

$2\tau(t)$ represents twice the transmission delay of the optical fiber link.

The frequency multiplier 609 may perform frequency multiplication processing on the clock signal A1. If processing is performed based on frequency tripling, a clock signal A4 may be obtained, and a phase representation form of the clock signal A4 may be represented as:

$$A4 = \cos(3\omega_0 t + 3\varphi_0).$$

The filter 608 may transmit the clock signal A3 to the frequency mixer 611, and the frequency multiplier 609 may also transmit the clock signal A4 to the frequency mixer 611. The frequency mixer 611 may perform frequency mixing on the clock signal A3 and the clock signal A4, to obtain a frequency-mixed signal, where the frequency-mixed signal includes a phase difference clock signal A5. After the frequency mixer 611 transmits the frequency-mixed signal to the filter 612, the filter 612 may obtain the phase difference clock signal A5 from the frequency-mixed signal through filtering. A phase representation form of the phase difference clock signal A5 may be represented as:

$$A5 = \cos(2\omega_0(t - \tau(t)) + 2\varphi_0).$$

The filter 612 may transmit the phase difference clock signal A5 to the frequency divider 613, and the frequency divider 613 may perform frequency division on the phase difference clock signal A5 to obtain a clock signal A6. A phase representation form of the clock signal A6 may be represented as:

$$A6=\cos\left(\frac{2\omega_0}{N}(t-\tau(t))+\frac{2\varphi_0}{N}\right).$$

$N$ is a coefficient of the frequency divider. If N=4, $A6=\cos\left(\frac{\omega_0}{2}(t-\tau(t))+\frac{\varphi_0}{2}\right)$, and a frequency $\frac{\omega_0}{2}$ of A6 is half of a frequency $\omega_0$ of the clock source signal A.

The frequency divider 613 transmits the clock signal A6 to the coupler 602. The coupler 602 may couple the clock signal A6 with the downlink digital signal. If $A6=\cos\left(\frac{\omega_0}{2}(t-\tau(t))+\frac{\varphi_0}{2}\right)$, the coupler coupled the clock signal with a valley point 1 of the downlink digital signal, and then transmits a coupled signal to the laser 603. The laser 603 may convert the coupled signal into an optical signal 3, and then transmit the optical signal 3 to the circulator 604. The circulator 604 transmits the optical signal 3 to the second apparatus 620 through the optical fiber link 640.

After receiving the optical signal 3, the circulator 621 in the second apparatus 620 sends the optical signal 3 to the photoelectric detector 622. The photoelectric detector 622 converts the optical signal 3 into an electrical signal 5. Then the photoelectric detector 622 transmits the electrical signal 5 to the power splitter 623. The power splitter 623 performs power division on the electrical signal 5 to obtain electrical signals 6. The power splitter 623 transmits the electrical signals 6 to the filter 624 and the power splitter 625. The filter 624 may obtain the downlink digital signal from the received electrical signal 6 through filtering. The power splitter 625 performs power division on the received electrical signal 6 to obtain electrical signals 7, and then transmits the electrical signals 7 to the filter 626 and the filter 629. The clock signal cannot be obtained from the electrical signal 7 through filtering by using a frequency of the filter 626, and the filter 629 may obtain a clock signal A7 from the electrical signal 7 through filtering. A phase representation form of the clock signal A7 may be represented as:

$$A7=\cos\left(\frac{2\omega_0}{N}(t)+\frac{2\varphi_0}{N}\right).$$

It can be learned from comparison between the clock signal A7 and the clock signal A6 that the transmission delay $\tau$ of the optical fiber link is canceled in a process of transmission on the optical fiber link.

The time synchronization module 630 may use the clock signal A7 to perform time synchronization. The time synchronization module may further include a device such as a frequency multiplier. If a frequency of the clock signal A7 is multiplied by $N$, the clock signal used for time synchronization and the clock source signal may be kept at a same frequency and in a same phase, thereby improving accuracy of the time synchronization.

It should be noted that, in the architecture shown in FIG. 6A(1) and FIG. 6A(2), one first apparatus 600 may complete time synchronization with each of a plurality of second apparatuses 620 through the illustrated photoelectric devices. Alternatively, as shown in FIG. 6B(1) and FIG. 6B(2), time synchronization with a corresponding second apparatus 620 may be completed via each of a plurality of time synchronization components in a first apparatus 600.

FIG. 6B(1) and FIG. 6B(2) are a diagram of another architecture of a communication system according to an embodiment of this application. Refer to FIG. 6B(1) and FIG. 6B(2). The first apparatus 600 includes the plurality of time synchronization components, and each time synchronization component includes the photoelectric devices shown in the first apparatus 600 in FIG. 6A(1) and FIG. 6A(2). One time synchronization component corresponds to one second apparatus 620, and time synchronization of different second apparatuses 620 is completed via different time synchronization components.

For the foregoing communication method, an embodiment of this application further provides a corresponding communication apparatus.

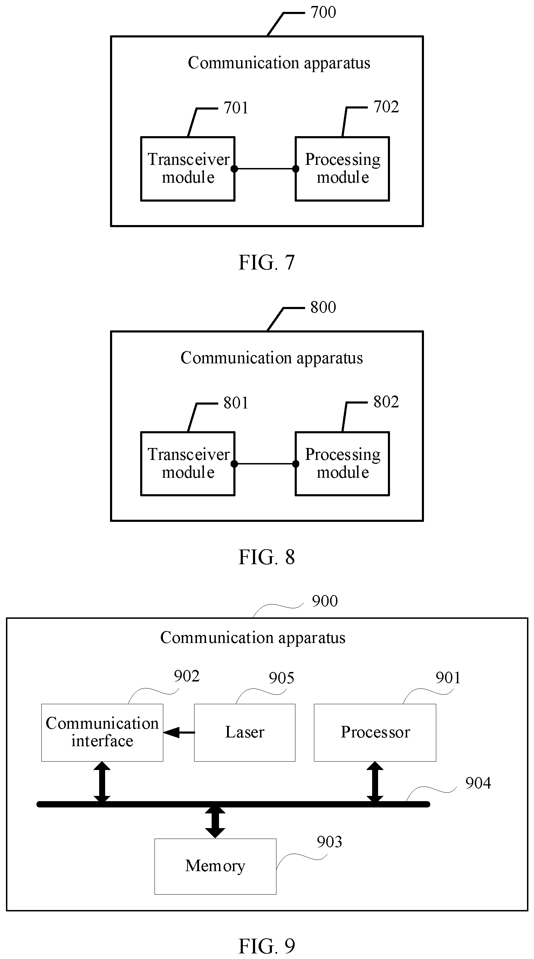

FIG. 7 is a diagram of a structure of a communication apparatus according to an embodiment of this application. Refer to FIG. 7. The communication apparatus 700 provided in this embodiment of this application includes a processing module 701 and a transceiver module 702.

The processing module 701 is configured to generate a first optical signal, where the first optical signal is a signal obtained by combining a first clock signal with a downlink digital signal, and the first clock signal includes a first transmission delay.

The transceiver module 702 is configured to send the first optical signal, where a second clock signal is obtained by transmitting the first clock signal on a transmission link, a sum of a transmission delay of the transmission link and the first transmission delay is zero, and the second clock signal is used for time synchronization.

Optionally, the first clock signal is combined with a first frequency band of the downlink digital signal.

Optionally, the first frequency band includes a first spectral null, the first clock signal is combined with the first spectral null of the downlink digital signal, and the first spectral null is any power valley point on a spectrum of the downlink digital signal.

Optionally, the transmission link is an optical fiber link.

Optionally, the processing module 701 is further configured to process a third clock signal and a fourth clock signal to obtain the first clock signal, where the third clock signal is obtained by filtering a second optical signal from the transmission link, the third clock signal is a clock signal obtained by transmitting a clock source signal on the transmission link in a round-trip manner, and the fourth clock signal is a frequency multiplied signal of the clock source signal.

Optionally, the processing module 701 is specifically configured to: perform frequency mixing on the third clock signal and the fourth clock signal to obtain a phase difference clock signal between the third clock signal and the fourth clock signal; and obtain the first clock signal based on the phase difference clock signal.

Optionally, the processing module 701 is specifically configured to perform frequency division on the phase difference clock signal to obtain the first clock signal.

Optionally, the processing module 701 is further configured to generate a third optical signal, where the third optical signal is a signal obtained by combining the clock source signal with the downlink digital signal.

The transceiver module 702 is further configured to send the third optical signal, where the third clock signal is obtained by transmitting the clock source signal on the transmission link in a round-trip manner.

Optionally, the clock source signal is combined with a second frequency band of the downlink digital signal.

Optionally, the second frequency band includes a second spectral null, the clock source signal is combined with the second spectral null of the downlink digital signal, and the second spectral null is any power valley point other than the power valley point corresponding to the first spectral null on the spectrum of the downlink digital signal.

For the communication apparatus described in this embodiment of this application, refer to the first apparatus or the functions of the first apparatus in FIG. 2 to FIG. 6B(1) and FIG. 6B(2) for understanding.

FIG. 8 is a diagram of a structure of a communication apparatus according to an embodiment of this application. Refer to FIG. 8. The communication apparatus 800 provided in this embodiment of this application includes a processing module 801 and a transceiver module 802.

The transceiver module 802 is configured to receive a first optical signal, where the first optical signal is a signal obtained by combining a first clock signal with a downlink digital signal, the first clock signal includes a first transmission delay, and a second clock signal is obtained by transmitting the first clock signal on a transmission link.

The processing module 801 is configured to: obtain a second clock signal from the first optical signal through filtering; and perform time synchronization based on the second clock signal.

Optionally, the second clock signal is combined with a first frequency band of the downlink digital signal.

Optionally, the processing module 801 is specifically configured to obtain the second clock signal from the first frequency band through filtering.

Optionally, the first frequency band includes a first spectral null, the first clock signal is combined with the first spectral null of the downlink digital signal, and the first spectral null is any power valley point on a spectrum of the downlink digital signal.

Optionally, the transmission link is an optical fiber link.

Optionally, the transceiver module 802 is further configured to send a second optical signal through the transmission link, where the second optical signal includes a clock signal obtained by transmitting the clock source signal on the transmission link.

Optionally, the transceiver module 802 is further configured to receive a third optical signal.

The processing module 801 is configured to obtain the clock signal from the received third optical signal through filtering, where the clock signal obtained through filtering is a signal obtained by transmitting the clock source signal on the transmission link, and the third optical signal is a signal obtained by combining the clock source signal with the downlink digital signal. The second apparatus generates the second optical signal based on the clock signal obtained through filtering.

Optionally, the clock source signal is combined with a second frequency band of the downlink digital signal.

Optionally, the processing module 801 is specifically configured to obtain the clock source signal from the second frequency band of the downlink digital signal through filtering.

Optionally, the second frequency band includes a second spectral null, the clock source signal is combined with the second spectral null of the downlink digital signal, and the second spectral null is any power valley point other than the power valley point corresponding to the first spectral null on the spectrum of the downlink digital signal.

For the communication apparatus described in this embodiment of this application, refer to the second apparatus or the functions of the second apparatus in FIG. 2 to FIG. 6B(1) and FIG. 6B(2) for understanding.

FIG. 9 is a diagram of a structure when a communication apparatus is a first apparatus. As shown in FIG. 9, the first apparatus 900 provided in this embodiment of this application includes a processor 901, a communication interface 902, a memory 903, a bus 904, and a laser 905. The processor 901, the communication interface 902, and the memory 903 are connected to each other by using the bus 904. The laser 905 may convert a data signal generated by the processor 901 into an optical signal. The communication interface 902 may be a circulator. In this embodiment of this application, the processor 901 is configured to control and manage an action of the first apparatus 90. For example, the processor 901 is configured to perform a clock signal processing process. The communication interface 902 is configured to support the first apparatus 900 in performing communication. For example, the communication interface 902 may receive and send an optical signal. The memory 903 is configured to store program code and data of the first apparatus 900.

The processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 904 may be a peripheral component interconnect (Peripheral Component Interconnect, PCI) bus or an extended industry standard architecture (Extended Industry Standard Architecture, EISA) bus, or the like. Buses may be classified into an address bus, a data bus, a control bus, and the like. For ease of representation, only one bold line is used to represent the bus in FIG. 9, but this does not mean that there is only one bus or only one type of bus.

When the first apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

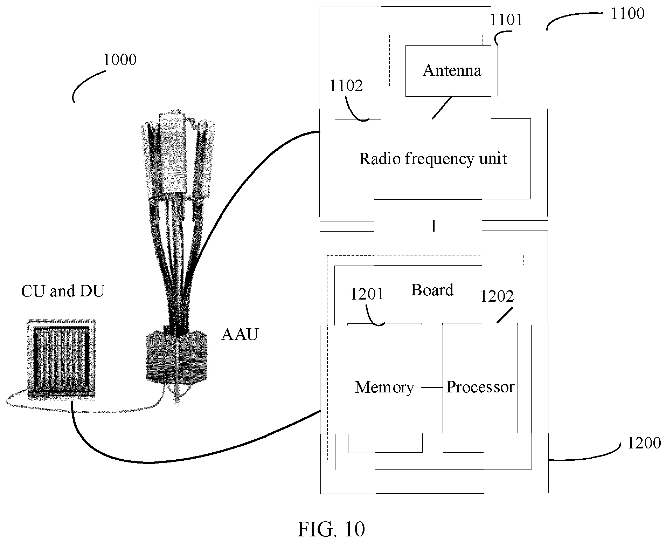

When the communication apparatus is a second apparatus, FIG. 10 is a diagram of a structure of the second apparatus 1000 according to an embodiment of this application. The second apparatus 1000 may be applied to the system shown in FIG. 1 or FIG. 2. For example, the second apparatus 1000 may be the second apparatus in the communication system in FIG. 1A or the second apparatus in the communication system in FIG. 1B, and is configured to perform functions of the second apparatus in the foregoing method embodiments. It should be understood that the following is merely an example. In a future communication system, the second apparatus may have another form and composition.

For example, in a 5G communication system, the second apparatus 1000 may include a CU, a DU, and an AAU. Compared with a second apparatus that is in an LTE communication system and that includes one or more radio frequency units such as an RRU and one or more BBUs,

a non-real-time part of the original BBU is split off and redefined as the CU, which is responsible for processing a non-real-time protocol and service, some physical layer processing functions of the BBU are combined with the original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form is shown in FIG. 10, and is consistent with a conventional 4G second apparatus. The CU and the DU are deployed on same hardware. It should be understood that FIG. 10 is merely an example, and constitutes no limitation on the protection scope of this application. For example, a deployment form may alternatively be that the DU is deployed in a BBU equipment room, CUs or DUs are deployed centrally, or CUs are centralized at a higher level.

The AAU 1100 may implement a transceiver function, is referred to as a transceiver unit 1100, and corresponds to the transceiver module 802 in FIG. 8. Optionally, the transceiver unit 1100 may also be referred to as a transceiver machine, a transceiver circuit, a transceiver, or the like, and may include at least one antenna 1101 and a radio frequency unit 1102. Alternatively, the transceiver unit 1100 may include a receiving unit and a sending unit. The receiving unit may correspond to a receiver (or referred to as a receiver machine or a receiving circuit), and the sending unit may correspond to a transmitter (or referred to as a transmitter machine or a transmitting circuit). The CU and the DU 1200 may implement an internal processing function, are referred to as a processing unit 1200, and correspond to the processing module 801 in FIG. 8. Optionally, the processing unit 1200 may control the second apparatus and the like, and may be referred to as a controller. The AAU, the CU, and the DU may be physically disposed together, or may be physically disposed separately.

In addition, the second apparatus is not limited to the form shown in FIG. 10, and may alternatively be in another form. For example, the second apparatus includes the BBU and an adaptive radio unit (adaptive radio unit, ARU), or includes the BBU and the AAU; or may be customer premises equipment (customer premises equipment, CPE), or may be in another form. This is not limited in this application.

In an example, the processing unit 1200 may include one or more boards. A plurality of boards may jointly support a radio access network (such as an LTE network) of a single access standard, or may respectively support radio access networks (such as an LTE network, a 5G network, a future network, or another network) of different access standards. The CU and the DU 1200 further include a memory 1201 and a processor 1202. The memory 1201 is configured to store necessary instructions and data. The processor 1202 is configured to control the second apparatus to perform a necessary action. For example, the processor 1202 is configured to control the second apparatus to perform an operation procedure related to the second apparatus in the foregoing method embodiments. The memory 1201 and the processor 1202 may serve the one or more boards. In other words, the memory and the processor may be separately disposed on each board. Alternatively, a plurality of boards may share a same memory and a same processor. In addition, a necessary circuit may be further disposed on each board.

It should be understood that the second apparatus 1000 shown in FIG. 10 can implement functions of the second apparatus in the method embodiments in FIG. 2 to FIG. 6B(1) and FIG. 6B(2). Operations and/or functions of the units in the second apparatus 1000 are separately used to implement corresponding procedures performed by the second apparatus in the method embodiments of this application. To avoid repetition, detailed descriptions are appropriately omitted herein. The structure of the second apparatus shown in FIG. 10 is merely a possible form, but shall not constitute any limitation on this embodiment of this application. According to this application, there may be a second apparatus structure in another form in the future.

The CU and the DU 1200 may be configured to perform an action that is implemented by the first apparatus and that is described in the foregoing method embodiments, and the AAU 1100 may be configured to perform an action that is sent to the first apparatus or received from the first apparatus and that is described in the foregoing method embodiments. For details, refer to the descriptions in the foregoing method embodiments. Details are not described herein again.

An embodiment of this application further provides a computer program product including instructions. When the computer program product is run on a computer, the computer is enabled to perform the method in embodiments shown in FIG. 2 to FIG. 6B(1) and FIG. 6B(2).

An embodiment of this application further provides a computer-readable storage medium, including computer instructions. When the computer instructions are run on a computer, the computer is enabled to perform the method in embodiments shown in FIG. 2 to FIG. 6B(1) and FIG. 6B(2).

An embodiment of this application further provides a chip apparatus, including a processor, configured to: connect to a memory, and invoke a program stored in the memory, to enable the processor to perform the method in embodiments shown in FIG. 2 to FIG. 6B(1) and FIG. 6B(2).

The processor mentioned above may be a general-purpose central processing unit, a microprocessor, an application-specific integrated circuit (application-specific integrated circuit, ASIC), or one or more integrated circuits configured to control program execution of the method in the embodiment shown in FIG. 4. The memory mentioned above may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a radio apparatus, or the like) to perform all or a part of steps of the method in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:

   generating a first optical signal, wherein the first optical signal is a signal obtained by combining a first clock signal with a downlink digital signal, and the first clock signal comprises a first transmission delay; and
   sending the first optical signal, wherein a second clock signal is obtained by transmitting the first clock signal on a transmission link, a sum of a transmission delay of the transmission link and the first transmission delay is zero, and the second clock signal is used for time synchronization.

2. The method according to claim 1, wherein the first clock signal is combined with a first frequency band of the downlink digital signal.

3. The method according to claim 2, wherein the first frequency band comprises a first spectral null, the first clock signal is combined with the first spectral null of the downlink digital signal, and the first spectral null is any power valley point on a spectrum of the downlink digital signal.

4. The method according to any one of claims 1 to 3, wherein the transmission link is an optical fiber link.

5. The method according to any one of claims 1 to 4, wherein the method further comprises:
   processing a third clock signal and a fourth clock signal to obtain the first clock signal, wherein the third clock signal is obtained by filtering a second optical signal from the transmission link, the third clock signal is a clock signal obtained by transmitting a clock source signal on the transmission link in a round-trip manner, and the fourth clock signal is a frequency multiplied signal of the clock source signal.

6. The method according to claim 5, wherein processing the third clock signal and the fourth clock signal to obtain the first clock signal comprises:

   performing frequency mixing on the third clock signal and the fourth clock signal to obtain a phase difference clock signal between the third clock signal and the fourth clock signal; and
   obtaining the first clock signal based on the phase difference clock signal.

7. The method according to claim 6, wherein obtaining the first clock signal based on the phase difference clock signal comprises:
   performing frequency division on the phase difference clock signal to obtain the first clock signal.

8. The method according to any one of claims 5 to 7, wherein the method further comprises:

   generating a third optical signal, wherein the third optical signal is a signal obtained by combining the clock source signal with the downlink digital signal; and
   sending the third optical signal, wherein the third clock signal is obtained by transmitting the clock source signal on the transmission link in a round-trip manner.

9. The method according to claim 8, wherein the clock source signal is combined with a second frequency band of the downlink digital signal.

10. The method according to claim 9, wherein the second frequency band comprises a second spectral null, the clock source signal is combined with the second spectral null of the downlink digital signal, and the second spectral null is any power valley point other than the power valley point corresponding to the first spectral null on the spectrum of the downlink digital signal.

11. A communication system, comprising a first apparatus, a transmission link, and a second apparatus, wherein the first apparatus communicates with the second apparatus through the transmission link;

    the first apparatus generates a first optical signal, wherein the first optical signal is a signal obtained by combining a first clock signal with a downlink digital signal, and the first clock signal comprises a first transmission delay;
    the second apparatus receives the first optical signal from the first apparatus, wherein a second clock signal is obtained by transmitting the first clock signal on the transmission link, and a sum of a transmission delay of the transmission link and the first transmission delay is zero;
    the second apparatus obtains the second clock signal from the first optical signal through filtering; and
    the second apparatus performs time synchronization based on the second clock signal.

12. A communication apparatus, comprising a coupler, a laser, and a circulator, wherein

the coupler is configured to combine a first clock signal with a downlink digital signal to obtain a first coupled signal, wherein the first clock signal comprises a first transmission delay;

the laser is configured to generate a first optical signal based on the first coupled signal; and

the circulator is configured to send the first optical signal through a transmission link between the distributed apparatus and a radio apparatus, wherein a second clock signal is obtained when the first clock signal passes through the transmission link, a sum of a transmission delay of the transmission link and the first transmission delay is zero, and the second clock signal is used by the radio apparatus to perform time synchronization.

13. The communication apparatus according to claim 12, wherein the first clock signal is combined with a first frequency band of the downlink digital signal.

14. The communication apparatus according to claim 13, wherein the first frequency band comprises a first spectral null, the first clock signal is combined with the first spectral null of the downlink digital signal, and the first spectral null is any power valley point on a spectrum of the downlink digital signal.

15. The communication apparatus according to any one of claims 12 to 14, wherein the transmission link is an optical fiber link.

16. The communication apparatus according to any one of claims 12 to 15, wherein the distributed apparatus further comprises a photoelectric detector, a first filter, a frequency multiplier, and a signal processing component, wherein

the photoelectric detector is configured to convert a second optical signal received by the circulator into an electrical signal;

the first filter is configured to obtain a third clock signal from the electrical signal through filtering, wherein the third clock signal is a clock signal obtained by transmitting a clock source signal on the transmission link in a round-trip manner;

the frequency multiplier is configured to perform frequency multiplication on the clock source signal to obtain a fourth clock source signal; and

the signal processing component is configured to process the third clock signal and the fourth clock signal to obtain the first clock signal.

17. The communication apparatus according to claim 16, wherein the signal processing component comprises a frequency mixer, a second filter, and a frequency divider, wherein

the frequency mixer is configured to perform frequency mixing on the third clock signal and the fourth clock signal to obtain a phase difference clock signal between the third clock signal and the fourth clock signal;

the second filter is configured to obtain, through filtering, the phase difference clock signal from a signal output by the frequency mixer; and

the frequency divider is configured to perform frequency division on the phase difference clock signal to obtain the first clock signal.

18. The communication apparatus according to claim 16 or 17, wherein the distributed apparatus further comprises a clock source module, wherein

the clock source module is configured to output the clock source signal;

the coupler is further configured to combine the clock source signal with the downlink digital signal to obtain a second coupled signal;

the laser is further configured to generate a third optical signal based on the second coupled signal; and

the circulator is further configured to send the third optical signal through the transmission link.

19. The communication apparatus according to claim 18, wherein the clock source signal is combined with a second frequency band of the downlink digital signal.

20. The communication apparatus according to claim 19, wherein the second frequency band comprises a second spectral null, the clock source signal is combined with the second spectral null of the downlink digital signal, and the second spectral null is any power valley point other than the power valley point corresponding to the first spectral null on the spectrum of the downlink digital signal.

21. A communication system, comprising a first apparatus and a second apparatus, wherein

the first apparatus is the communication apparatus according to any one of claims 12 to 20; and

the second apparatus performs time synchronization based on a clock signal provided by the first apparatus.

22. A communication apparatus, comprising a communication interface, a processor, and a memory, wherein the communication interface and the processor are coupled to the memory, the memory is configured to store a program or instructions, and when the program or the instructions are executed by the processor, the communication apparatus is enabled to perform the method according to any one of claims 1 to 10.

23. A communication apparatus, comprising a unit configured to perform the method according to any one of claims 1 to 10.

24. A computer-readable storage medium, wherein the computer-readable storage medium stores instructions, and when the instructions are run on a computer device, the computer device is enabled to perform the method according to any one of claims 1 to 10.

25. A computer program product, wherein the computer program product comprises computer program code, and when the computer program code is run on a computer device, the computer device is enabled to perform the method according to any one of claims 1 to 10.

Clock information
apparatus

Transmission link
103A

Second
apparatus
102A

First
apparatus 101

Transmission link
103B

Second
apparatus
102B

Transmission
link 103N

⋮

Second
apparatus
102N

FIG. 1A

FIG. 1B

FIG. 2

FIG. 3A

FIG. 3B

FIG. 4

FIG. 5A

FIG. 5B

FIG. 6A(1)

FIG. 6A(2)

EP 4 625 871 A1

FIG. 6B(1)

First apparatus 600

Time synchronization component

Downlink digital signal

Clock source module 601

Coupler 602

Laser 603 — Optical signal 1 — Circulator 604 — Optical signal 3

Frequency multiplier 609

Signal processing component 610

Frequency divider 613

Filter 612

Frequency mixer 611

Filter 608

Filter 607

Photoelectric detector 605 — Electrical signal 4 — Power splitter 606 — Electrical signal 5

Uplink digital signal

A1, A2, A3, A4, A5, A6

640

TO FIG. 6B(2)

Time synchronization component

Time synchronization component

TO FIG. 6B(2)

TO FIG. 6B(2)

FIG. 6B(2)

700

Communication apparatus

701

Transceiver module

702

Processing module

FIG. 7

800

Communication apparatus

801

Transceiver module

802

Processing module

FIG. 8

900

Communication apparatus

902

Communication interface

905

Laser

901

Processor

904

903

Memory

FIG. 9

FIG. 10

## INTERNATIONAL SEARCH REPORT

| International application No. |
| --- |
| **PCT/CN2022/140272** |

| A. | CLASSIFICATION OF SUBJECT MATTER |
| --- | --- |

H04L7/00(2006.01)i; H04J3/06(2006.01)i

According to International Patent Classification (IPC) or to both national classification and IPC

| B. | FIELDS SEARCHED |
| --- | --- |

Minimum documentation searched (classification system followed by classification symbols)

IPC: H04L, H04J, H04B

Documentation searched other than minimum documentation to the extent that such documents are included in the fields searched

Electronic data base consulted during the international search (name of data base and, where practicable, search terms used)

CNTXT, CNKI, CJFD, VEN, ENTXT, ENTXTC: 光, 时钟, 时间, 同步, 数字, 叠加, 混频, 传输时延, 延时, 传输, 相位差, 倍频, 分频, optical, clock, time, synchronization, digital, superposition, mixing, transmission latency, delay, transmission, phase difference, frequency multiplication, frequency division

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 108011705 A (ZTE CORP.) 08 May 2018 (2018-05-08) description, paragraphs [0120]-[0254], and figures 1-9 | 1-25 |
| Y | CN 112713953 A (BEIJING UNIVERSITY OF POSTS AND TELECOMMUNICATIONS) 27 April 2021 (2021-04-27) description, paragraphs [0068]-[0123], and figures 1-2 | 1-25 |
| Y | CN 113452502 A (THE 54TH RESEARCH INSTITUTE OF CHINA ELECTRONICS TECHNOLOGY GROUP CORP.) 28 September 2021 (2021-09-28) description, paragraphs [0029]-[0063], and figures 1-2 | 1-25 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 September 2023** | **08 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/140272**

| Patent document cited in search report | | | Publication date (day/month/year) | Patent family member(s) | | | Publication date (day/month/year) |
|---|---|---|---|---|---|---|---|
| CN | 108011705 | A | 08 May 2018 | WO | 2018077302 | A1 | 03 May 2018 |
| | | | | CN | 108011705B | B | 15 September 2020 |
| CN | 112713953 | A | 27 April 2021 | CN | 112713953 | B | 12 July 2022 |
| CN | 113452502 | A | 28 September 2021 | CN | 113452502 | B | 06 May 2022 |

Form PCT/ISA/210 (patent family annex) (July 2022)